# EUROPEAN PATENT APPLICATION

(11) **EP 1 016 887 A1**
(43) Date of publication of application: **05.07.2000**
(21) Application number: 99403328.0
(22) Date of filing: 31.12.1999
(51) Int. Cl.: G02B 6/44

(54) **Tight-buffered optical fiber bundle and optical fiber cable composed of the same**

(30) Priority: 31.12.1998 KR 9863879; 31.12.1998 KR 9863887; 31.12.1998 KR 9863905; 31.12.1998 KR 9828677
(71) Applicant: Daewoo Telecom Ltd., Incheon 404-250 (KR)
(72) Inventor: Kwon, Oh Joon, Incheon 401-042 (KR)
(74) Representative: Thinat, Michel

(57) **Abstract**

The present invention relates to a tight-buffered optical fiber bundle for manufacturing an optical fiber cable for indoor use, and more particularly relates to a tight-buffered optical fiber bundle 10 and an optical fiber cable composed of the same which comprises a plurality of optical fibers 1 and a coated layer 5 coated integrally for providing at least one or two necks 7 or connecting parts 13 between the adjacent optical fibers 1, thus diverging the respective optical fibers 1 following the necks 7 or connecting parts 13 easily.

## Description

### BACKGROUND OF THE INVENTION

### Field of the Invention

The present invention relates to a tight-buffered optical fiber bundle for manufacturing an optical fiber cable for indoor use, and more particularly relates to a tight-buffered optical fiber bundle and an optical fiber cable composed of the same which can diverge the respective optical fibers by means of necks formed between the adjacent optical fibers by coating the plural optical fibers integrally.

### Discussion of Related Art

Recently, the demand of optical fiber cables have been increased according as various telecommunication services have been spread gradually. These optical fiber cables are to be divided into out door cables and indoor cables in general according to the installation place. Especially, the indoor cable, applied in a short distance or in a building, is considerably lighter and weaker than the outdoor cable.

The emerging multimedia access network, especially an optical access network installed in a limited duct space like an intelligent building requires multi-core optical cables having smaller diameter. To meet this requirement, it is recommended to apply a ribbon type cable rather than a loose tube strand cable, since the ribbon type cable has 30% or more increase of fiber density with better additive properties compared to the loose tube strand cable.

The conventional ribbon type cables, as disclosed in the U.S. Patent No. 4,752,112, U.S. Patent No. 5,457,762, U.S. Patent No. 5,761,363, etc., are formed by coating integrally plural optical fibers arranged in a row by a coated layer and a jacket. That is, since the ribbon type cable is manufactured through the processes of bundling and coating again after first coating each optical fiber, it makes the outer diameter of the ribbon type cable large and decreases its productivity as well.

### SUMMARY OF THE INVENTION

Accordingly, the present invention is directed to a tight-buffered optical fiber bundle and a multi-core optical fiber cable composed of the same that substantially obviates one or more of the problems, limitations, and disadvantages of the related art.

It is an object of the present invention to provide a tight-buffered optical fiber bundle by coating integrally a plurality of optical fibers which has no coated layer or includes a relatively thin coated layer, thus increasing productivity.

It is another object of the present invention to provide a tight-buffered optical fiber bundle by coating integrally a plurality of optical fibers of lattice arrangement, thus increasing productivity.

It is a further object of the present invention to provide a tight-buffered optical fiber bundle which can diverge the respective optical fibers by providing necks in a longitudinal direction between the adjacent optical fibers, thus diverging the respective coated optical fibers easily following the necks.

To accomplish the objects of the present invention, there is disclosed a tight-buffered optical fiber bundle in accordance with an embodiment of the invention comprising: a plurality of optical fibers disposed in a low and spaced apart from each other; and a coated layer for coating the plural optical fibers untegrally so as to provide a plurality of necks in a longitudinal direction between the adjacent optical fibers, thus diverging the respective coated optical fibers easily following the necks. Here, the optical fibers have no coated layer or have a relatively thin coated layer.

To accomplish the objects of the present invention, there is disclosed a tight-buffered optical fiber bundle in accordance with another embodiment of the invention comprising: a plurality of optical fibers disposed in a low and spaced apart from each other; and a coated layer for coating the plural optical fibers integrally so as to form a plurality of connecting parts in a longitudinal direction between the adjacent optical fibers, thus diverging the respective coated optical fibers easily following the connecting part. Here, the optical fibers have no coated layer or have a relatively thin coated layer. Besides, the distance of the adjacent optical fibers is larger than the thickness of the coated layer.

To accomplish the objects of the present invention, there is disclosed an optical fiber cable composed of a tight-buffered optical fiber bundle in accordance with another embodiment of the invention comprising: a tight-buffered optical fiber bundle including a plurality of optical fibers integrally coated in a row so as to form a plurality of necks between the adjacent optical fibers in a longitudinal direction; an auxiliary strength member arranged on outer circumference of the tight-buffered optical fiber bundle; and a jacket coated on outer circumference of the auxiliary strength member.

To accomplish the objects of the present invention, there is disclosed an optical fiber cable composed of a tight-buffered optical fiber bundle in accordance with another embodiment of tire invention comprising: a plurality of tight-buffered optical fiber bundles arranged in lattice arrangement integrally so as to form at least two necks between a plurality of optical fibers disposed in a low and spaced apart from each other; an auxiliary strength member arranged on outer circumference of the tight-buffered optical fiber bundles coated in lattice arrangement; and a jacket coated on outer circumference of the auxiliary strength member. Here, the optical fibers have no coated layer or have a relatively thin coated layer.

To accomplish the objects of the present invention, there is disclosed a multi-core optical fiber cable composed of tight-buffered optical fiber bundles in accordance with another embodiment of the invention comprising: a central strength member; a plurality of loose tubes arranged spirally on outer circumference of the central strength member; a plurality of tignt-buffered optical fiber bundles inserted and piled up in the loose tubes; and a plurality of coated layers for coating outer circumference of the loose tubes.

To accomplish the objects of the present invention, there is disclosed a multi-core optical fiber cable composed of tight-buffered optical fiber bundles in accordance with another embodiment of the invention comprising: a multi-slot rod, wherein a central strength member is laid, having a plurality of slots; a plurality of tight-buffered optical fiber bundles inserted and piled up in the slots; and a plurality of coated layers for coating the outer circumference of the multi-slot rod.

To accomplish the objects of the present invention, there is disclosed a multi-core optical fiber cable composed of tight-buffered optical fiber bundles in accordance with another embodiment of the invention comprising: a circular rod, wherein a central strength member is laid; a plurality of tight-buffered optical fiber bundles of lattice arrangement disposed fast onto outer circumference of the circular rod spirally; a plurality of fillers inserted into gaps between the plural tight-buffered optical fiber bundles of lattice arrangement; an auxiliary strength member arranged on outer circumference of the tight-buffered optical fiber bundles of lattice arrangement; and a jacket coated on outer circumference of the auxiliary strength member.

It is to be understood that both the foregoing general description and the following detailed description are exemplary and explanatory and are intended to provide further explanation of the invention as claimed.

### BRIEF DESCRIPTION OF THE ATTACHED DRAWINGS

Fig. 1 is a perspective view showing a tight-buffered optical fiber bundle in accordance with an embodiment of the present invention;
Fig. 2 is a perspective view showing a conventional tight-buffered optical fiber;
Fig. 3 is a perspective view showing a tight-buffered optical fiber bundle in accordance with another embodiment of the present invention;
Fig. 4a is a perspective view showing a tight-buffered optical fiber bundle of lattice arrangement in accordance with another embodiment the present invention;
Fig. 4b is a perspective view showing another tight-buffered optical fiber bundle of lattice arrangement in accordance with another embodiment of the present invention;
Fig. 5a is a perspective view showing an optical fiber cable composed of the tight-buffered optical fiber bundle in accordance with another embodiment of the present invention;
Fig. 5b is a perspective view showing an optical fiber cable composed of the tight-buffered optical fiber bundle of lattice arrangement in accordance with another embodiment of the present invention;
Fig. 6 is a sectional view showing a multi-core optical fiber cable composed of the tight-buffered optical fiber bundles in accordance with another embodiment of the present invention;
Fig. 7 is a perspective view showing a multi-core optical fiber cable composed of the tight-buffered optical fiber bundles in accordance with another embodiment of the present invention;
Fig. 8a is a perspective view showing a multi-core optical fiber cible composed of the tight-buffered optical fiber bundles of lattice arrangement in accordance with another embodiment of the present invention; and
Fig. 8b is a sectional view showing a multi-core optical fiber cable composed of the tight-buffered optical fiber bundles of lattice arrangement in accordance with another embodiment of the present invention.

### DETAILED DESCRIPTION OF PREFERRED EMBODIMENT

Reference will now be made in detail to the preferred embodiments of the present invention, examples of which are illustrated in the accompanying drawings.

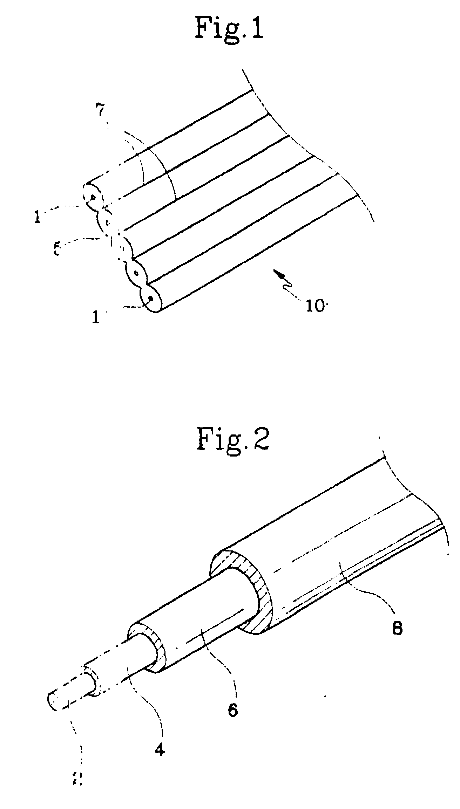

Now referring to Fig. 1, a tight-buffered optical fiber bundle 10 is composed of integrally coated plural optical fibers 1 arranged in a row. A coated layer 5 is formed with PVC, nylon havirc elasticity and flexibility for preventing microbending. As shown in Fig. 2, the conventional optical fiber 2 is composed of an optical fiber and a coated layer 4. Accordingly, it is necessary to add a separate process for coating again over the coated layer 4. Whereas, the present invention facilitates manufacturing the ribbon type cable 10 by only process for coating the plural optical fiber 1 integrally. More specially, the present invention increases productivity since the plural optical fibers having no coated layer are coated integrally at a time. Besides, it is possible to coat the optical fibers 1 of relatively thin coated layers integrally at a time, for protecting the surfaces of the optical fibers 1, if necessary. In this case, it also increases productivity and makes it thinner than the conventional ribbon type cable 1 including the coated layer 6 and the jacket 8, respectively. Furthermore, the present invention facilitates diverging the respective optical fibers 1 by providing necks 7 between the adjacent optical fibers 1. The necks 7 are very important to accomplish the substantial objects of the present invention. Accordingly, since the present invention facilitates diverging the optical fibers without any special tools, it increases operation efficiency in working fields. That is, where as the coated layer of the conventional ribbon type cable is formed hard by means of acrylate resin, the present invention uses flexible materials such as thermoplastic elastomer, soft PVC, nylon, etc., which makes it possible to tear the respective optical fibers 1 very easily. Therefore, the ribbon type cable in accordance with the present invention is suitable for the indoor use. That is, since the indoor optical cable should be bent easily, he outdoor optical cable having hard coated layers is not suitable for the indoor use. Because the outdoor optical cable is formed with thin and hard coated layers, it may be cut very easily. The tight-buffered optical fiber bundle 10 according to the present invention includes plural optical fibers 1 which are not broken easily as the coated layer 5 is made of relatively thick with soft materials. For example, whereas the thickness of the coated layer of the conventional ribbon type cable is approximately 0.35mm, that of the present invention is desired to be up to maximum 0.9mm.

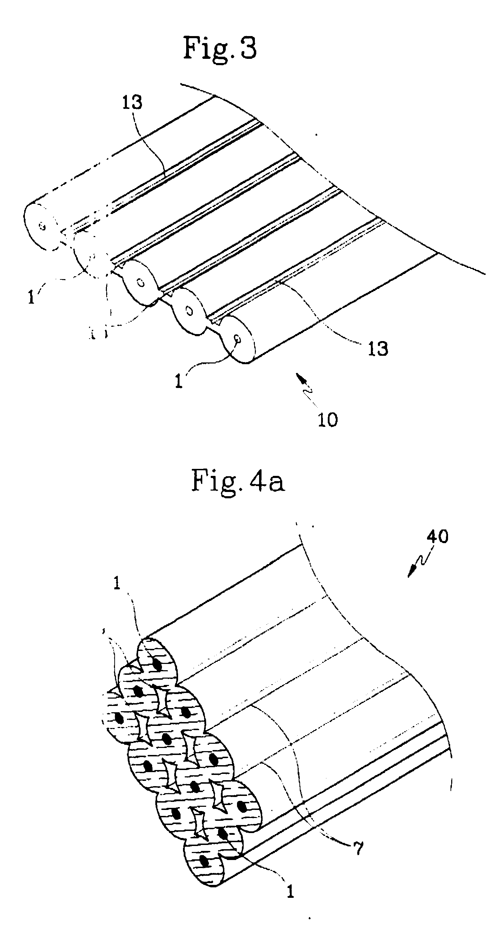

Now referring to Fig. 3 , a perspective view showing a tight-buffered optical fiber bundle in accordance with another embodiment of the present invention, the tight-buffered optical fiber bundle 10 comprises connecting parts 13 between the plural optical fibers 1 arranged in a row. Accordingly, it is easier to separate the respective optical fibers 1 by means of the connecting parts 13 than the necks 7. Furthermore, when each notch 15 is provided in the middle of the connecting parts 13 in the longitudinal direction, it is easier to separate the optical fibers 1 following the notch 15.

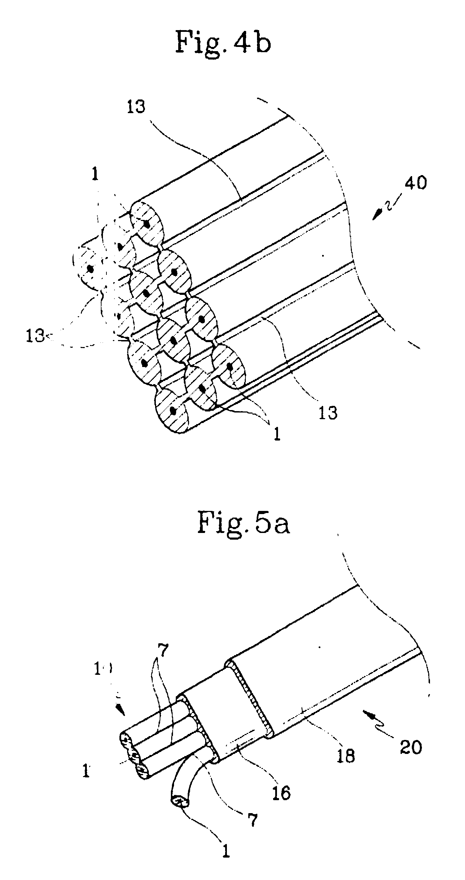

Meanwhile, another embodiment of the present invention is depicted in Fig. Via, a tight-buffered optical fiber bundle of lattice arrangement is formed in a overall rectangular shape by connecting each optical fiber 1 through more than two necks 7. That is, according to the present invention, there is no need to pile up the plural ribbon-type cables in the conventional multi-core optical fiber cable. Besides, the present invention increases productivity by coating the plural optical fibers 1 by means of one compressor at a time. As shown in Fig. 4b, each optical fiber 1 is joined with one another through more than two connecting part 13. Besides, it is desired tc provide the notches 15 between the respective adjacent connecting parts 13.

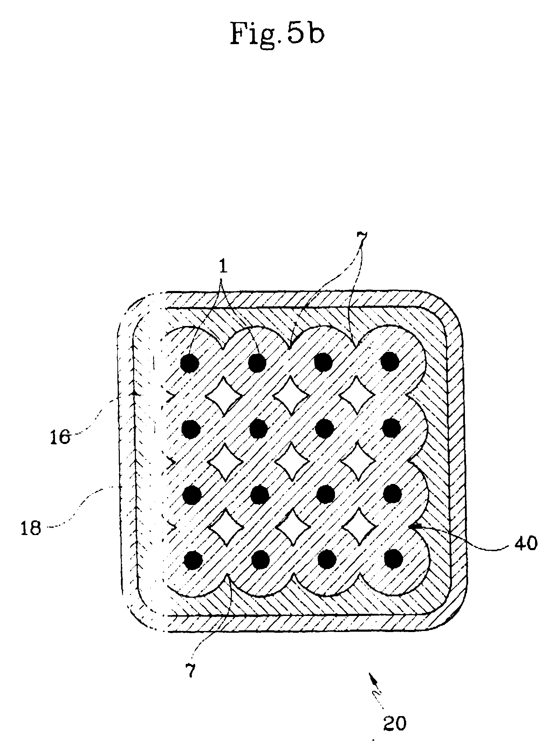

Referring to Fig. 5a and 5b, showing an optical fiber cable composed of the tight-buffered optical fiber bundle, since the tight-buffered optical fiber bundles 10 and 40 include plural optical fibers 1 arranged in a row or in lattice, it is easy to manufacture the indoor cables only by coating an auxiliary strength member 16 and a jacket 18. Accordingly, it is easier and simpler to manufacture the indoor optical cable in accordance with the present invention than the conventional optical cable. That is, it is difficult and takes long time to manufacture the conventional indoor optical cable as the plural optical fibers are stranded spirally on the outer circumference of the central strength member. Furthermore, it needs a large working space to install pay-off machines for supplying the respective optical fibers. However, it is possible to manufacture the indoor optical cable just by arranging a predetermined coated layer on the outer circumference of the tight-buffered optical fiber bundles in accordance with the present invention without stranding the respective optical fibers.

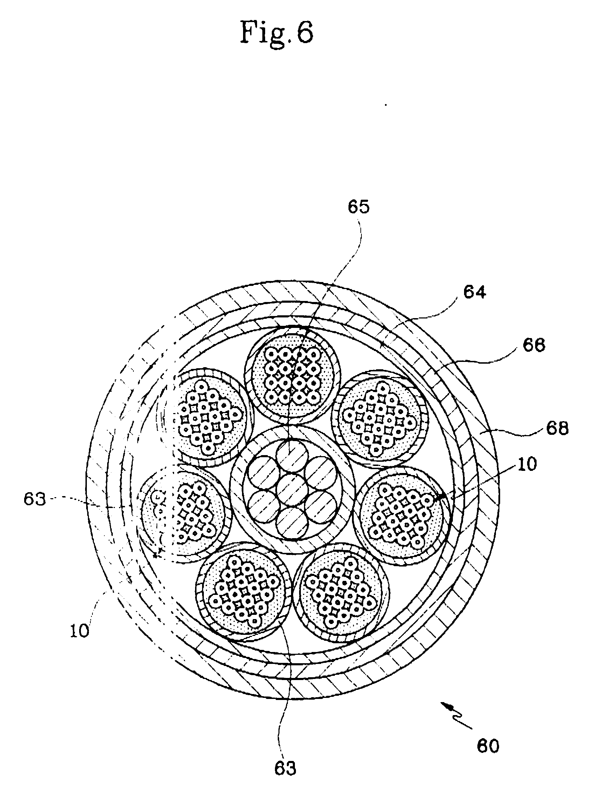

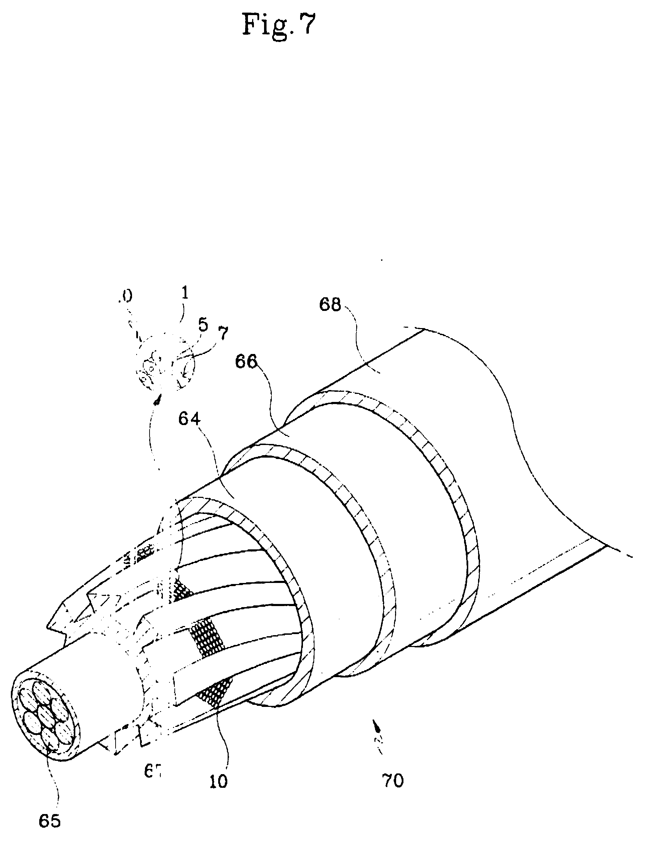

The tight-buffered optical fiber bundles in accordance with the present invention are suitable for manufacturing the multi-core optical fiber cable for indoor use. As shown in Fig. 6, a plurality of loose tubes 63 include the tight-buffered optical fiber bundles 10 and 40 according to the present inventicr are installed spirally on outer circumference of a central strength member 64. Then, the outer circumference of the loose tubes is coated with predetermined coated layers 64, 66 and 68, thus completing the multi-core optical fiber cable 60 composed of tight-buffered optical fiber bundles for indoor use. Besides, according to another embodiment of the present invention, a multi-core optical fiber cable composed of tight-buffered optical fiber bundles is shown in Fig. 7. That is, tight-buffered optical fiber bundles 10 and 40 of the invention are inserted into a plurality of slots in a multi-slot rod 67 wherein the central strength member 65 is laid, then predetermined coated layers 64, 66 and 68 are applied on the outer circumference.

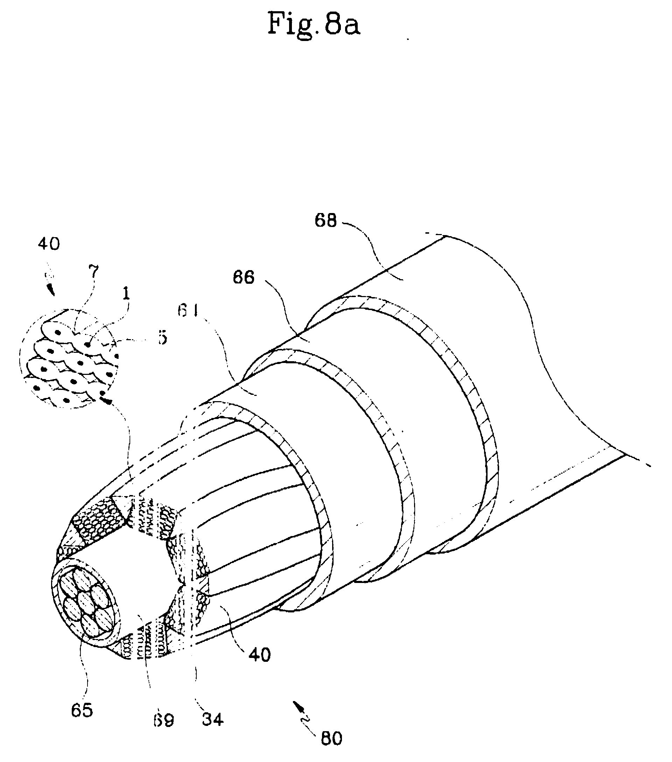

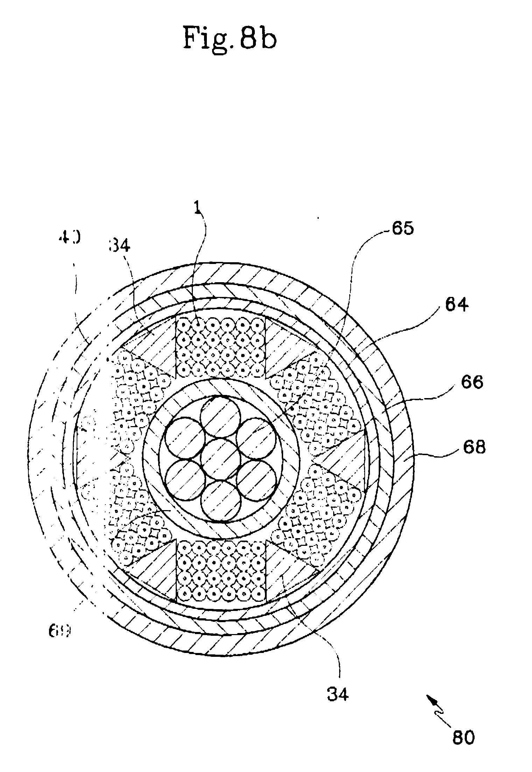

Additionally, it is possible to manufacture the multi-core optical fiber with easy and low cost, since the tight-buffered optical fiber bundle 40 of lattice arrangement according to the present invention comprises a plurality of optical fibers 1 piled up in rectangular shape. That is, as shown in Fig. 8a and 8b, after install the tight-buffered optical fiber bundles 10 and 40 of the invention spirally on outer circumference of a circular rod 69 wherein the central strength member 65 is laid, fillers 35 are inserted into gaps between the adjacent tight-buffered optical fiber bundles 40. Then, predetermined coated layers 64, 66 and 68 are applied on the outer circumference of the tight-buffered optical fiber bundles 40 the fillers 35, thus completing the multi-core optical fiber cables 80 for indoor use. Meanwhile, it is desired that the fillers 35 are made of aramid fibers having high tension strength. Furthermore, it is desired that the coated layers of the multi-core optical fiber cable 80 include a water-proof layer 64 coated with water-proof tape, a metal coated layer 66 on outer circumference of the water-proof layer 64 for buffering external impact, and a jacket of polyethylene 68 on exterior layer.

The multi-core optical fiber cable 40 composed of tight-buffered optical fiber bundles of lattice arrangement according to the present invention can decrease manufacturing cost sharply since it doesn't apply the multi-slot rod or grooves. Besides, it can save manufacturing time and space, since it needs a minimum pay-off machines supplying ribbon-type optical fibers. Furthermore, the multi-core optical fiber cable 40 composed of tight-buffered optical fiber bundles having the lattice arrangement can increase fiber density since it is possible to install.as much optical fibers as the thickness of grooves in the conventional optical fiber cable. According to test results, whereas the conventional tight-bound type optical fiber cable of 22mm in diameter contains 72 fibers and its fiber density is 0.189core/mm², the multi-core optical fiber cable of 19mm in diameter according to the present invention contains 144 fibers, and its fiber density is 0.508core/mm².

It will be apparent to those skilled in the art that various modifications and variations can be made in the tight-buffered opticaL fiber bundle and multi-core optical fiber cable composed of the same of the present invention without departing from the spirit or scope of the invention. Thus, it is intended that the present invention cover the modifications and variations of this invention provided they come within the scope of the appended claims and their equivalents.

## Claims

1. A tight-buffered optical fiber bundle comprising:
a plurality of optical fibers disposed in a low and spaced apart from each other; and
a coated layer for coating the plural optical fibers integrally so as to form a plurality of necks in a longitudinal direction between the adjacent optical fibers, thus diverging the respective coated optical fibers easily following the necks.

2. The tight-buffered optical fiber bundle according to claim 1, wherein the plural optical fibers have no coated layer.

3. The tight-buffered optical fiber bundle according to claim 1, wherein the plural optical fibers have a relatively thin coated layer.

4. A tight-buffered optical fiber bundle comprising:
a plurality of optical fibers disposed in a low and spaced apart from each other; and
a coated layer for coating the plural optical fibers integrally so as to form a plurality of connecting parts in a longitudinal direction between the adjacent optical fibers, thus diverging the respective coated optical fibers easily following the connecting part.

5. The tight-buffered optical fiber bundle according to claim 4, wherein a plurality of notches are further provided in a longitudinal direction in the middle of the connecting parts.

6. A tight-buffered optical fiber bundle comprising:
a plurality of optical fibers disposed in lattice arrangement and spaced apart from each other; and
a coated layer for coating the plural optical fibers integrally so as to form at least two necks in a longitudinal direction between the adjacent optical fibers, thus diverging the respective coated optical fibers easily following the necks.

7. The tight-buffered optical fiber bundle according to claim 6, wherein the coated layer is for coating the plural optical fibers integrally so as to form at least two connecting parts in a longitudinal direction between the adjacent optical fibers.

8. An optical fiber cable composed of a tight-buffered optical fiber bundle comprising:
a tight-buffered optical fiber bundle including a plurality of optical fibers integrally coated in a row so as to form a plurality of necks between the adjacent optical fibers in a longitudinal direction;
an auxiliary strength member arranged on outer circumference of the tight-buffered optical fiber bundle; and
a jacket coated on outer circumference of the auxiliary strength member.

9. An optical fiber cable composed of a tight-buffered optical fiber bundle comprising:
a tight-buffered optical fiber bundle coated in lattice arrangement integrally so as to form at least two necks between a plurality of optical fibers disposed in a low and spaced apart from each other;
an auxiliary strength member arranged on outer circumference of the tight-buffered optical fiber bundle coated in lattice arrangement; and
a jacket coated on outer circumference of the auxiliary strength member.

10. The optical fiber cable composed of a tight-buffered optical fiber bundle according to claim 9, wherein the tight-buffered optical fiber bundle is coated integrally so as to form at least two connecting parts between the adjacent plural optical fibers in a longitudinal direction.

11. An optical fiber cable composed of tight-buffered optical fiber bundles comprising:
a central strength member;
a plurality of loose tubes arranged spirally on outer circumference of the central strength member;
a plurality of tight-buffered optical fiber bundles inserted and piled up in the loose tubes; and
a plurality of coated layers for coating outer circumference of the loose tubes.

12. An optical fiber cable composed of tight-buffered optical fiber bundles comprising:
a multi-slot rod, wherein a central strength member is laid, having a plurality of slots;
a plurality of tight-buffered optical fiber bundles inserted and piled up in the slots; and
a plurality of coated layers for coating the outer circumference of the multi-slot rod.

13. An optical fiber cable composed of tight-buffered optical fiber bundles comprising:
a circular rod, wherein a central strength member is laid;
a plurality of tight-buffered optical fiber bundles of lattice arrangement disposed fast onto outer circumference of the circular rod spirally;
a plurality of fillers inserted into gaps between the plural tight-buffered optical fiber bundles of lattice arrangement;
an auxiliary strength member arranged on outer circumference of the tight-buffered optical fiber bundles of lattice arrangement; and
a jacket coated on outer circumference of the auxiliary strength member.
